Europäisches Patentamt

European Patent Office

Office européen des brevets

(19)

(11) Numéro de publication: **0 189 724**
**B1**

## (12) FASCICULE DE BREVET EUROPEEN

(45) Date de publication du fascicule du brevet:
**12.04.89**

(21) Numéro de dépôt: **85420227.2**

(22) Date de dépôt: **12.12.85**

(51) Int. Cl.⁴: **G 01 N 21/07**

(54) **Barrette de conditionnement, dispositif et procédé pour la mis en oeuvre de cette barrette.**

(30) Priorité: **21.12.84 FR 8419719**

(43) Date de publication de la demande:
**06.08.86 Bulletin 86/32**

(45) Mention de la délivrance du brevet:
**12.04.89 Bulletin 89/15**

(84) Etats contractants désignés:
**AT BE CH DE GB IT LI LU NL SE**

(56) Documents cités:
**EP-A- 0 066 828**
**EP-A- 0 084 983**
**FR-A- 2 524 874**

(73) Titulaire: **Guigan, Jean, 9, rue Jean Mermoz,
F-75008 Paris (FR)**

(72) Inventeur: **Guigan, Jean, 9, rue Jean Mermoz,
F-75008 Paris (FR)**

(74) Mandataire: **Laurent, Michel et al, Cabinet LAURENT et
GUERRE B.P. 32, F-69131 Ecully Cédex (FR)**

ACTORUM AG

## Description

La présente invention concerne les analyses médicales du type identibiogramme et antibiogramme, en particulier pour l'identification bactériologique de colonies microbiennes. Plus précisément, elle concerne un barrette de conditionnement pour effectuer de telles analyses, ainsi qu'un dispositif et un procédé pour la mise en œuvre de ladite barrette.

Conformément à la demande de brevet EP-A-0 084 983, pour l'analyse d'un échantillon liquide par colorimétrie ou photométrie, on a proposé une barrette, allongée, comportant à une première extrémité une enceinte pour la réception de l'échantillon à analyser, et au moins deux séries de cuves alignées longitudinalement et parallèlement les unes aux autres, à savoir respectivement des cuves de réaction contenant des réactifs appropriés, à parois transparentes, et des précuves de dosage, chaque précuve de dosage étant reliée à une cuve de réaction par un conduit capillaire.

Toujours selon ce même document, un dispositif d'analyse, mettant en œuvre une barrette telle que définie précédemment, comporte un plateau avec des moyens pour le faire tourner autour d'un axe vertical. Ce plateau peut recevoir diamétralement une pluralité de barrettes de conditionnement.

Le procédé exécuté avec une barrette et le dispositif précédents consiste à mettre en rotation le plateau tournant, pour faire agir la force centrifuge selon la longueur de chaque barrette, et dans un seul sens, à savoir de l'enceinte de réception de l'échantillon à analyser, vers les différentes précuves de dosage, puis de ces dernières vers les différentes cuves correspondantes de réaction. La réaction dans chaque cuve de réaction, avec un réactif approprié, d'une quote-part de l'échantillon liquide, dosé dans une cuve de prédosage correspondante, développe une couleur, qu'il est possible d'exploiter par colorimétrie ou photométrie pour déduire des indications quantitatives et analytiques.

Un dispositif et une barrettes tels que précédemment décrits présentent les inconvénients suivants. Tout d'abord, la barrette est inadaptée à des analyses médicales du type identibiogramme ou antibiogramme. A tout le moins, l'adaptation d'une telle barrette à ce type d'analyse, passe au moins par les phases supplémentaires suivantes:

— prélèvement d'une colonnie microbienne sur une boîte d'isolement;

— ensemencement avec la colonnie d'un tube contenant un milieu liquide;

— étuvage de ce tube à 37 °C pendant 3 ou 4 heures minimum;

— observation pour un opérateur du développement de la colonnie dans le tube;

— lorsque le développement est suffisant, réalisation d'une dilution pour aboutir à un inoculum de 10 millilitres;

— transvasement de cet inoculum dans l'enceinte de réception de la barrette selon la demande de brevet européen EP-A-0 084 983.

Ensuite, selon le brevet précité, d'une part chaque cuve de dosage communique librement avec l'enceinte de réception de l'échantillon liquide pour la première, et la précuve de dosage précédente pour les suivantes, et d'autre part la quote-part liquide à destination de chaque cuve de réaction s'écoule dans cette dernière, au fur et à mesure de son introduction dans la précuve de dosage correspondante. Tout ceci, en liaison avec l'unique sens de centrifugation ne permet pas d'obtenir dans la pratique une quote-part prédéterminée de l'échantillon dans chaque cuve de réaction, ce qui rend l'analyse colorimétrique peu fiable.

La présente invention a pour premier objet, une barrette de conditionnement du type précédent et telle que décrite dans la revendication 1, permettant d'effectuer des analyses médicales du type identibiogramme et antibiogramme, tout en améliorant la précision et la reproductibilité de la quote-part liquide introduite dans chaque cuve de réaction.

Conformément à la barrette selon l'invention, l'enceinte de réception de l'échantillon à analyser est une enceinte de culture contenant un milieu liquide de culture. Il est prévu une troisième série de cuves constituée par des cuves de trop-plein, alignées longitudinalement et parallèlement aux deux séries de cuves de réaction et de précuves de dosage respectivement; cette troisième série de cuves forment avec ces dernières une pluralité de $n$ cellules d'analyse. Chaque cellule d'analyse comprend une précuve de dosage, d'un côté de cette dernière une cuve de réaction et de l'autre côté une cuve de trop-plein. La cuve de réaction et la cuve de trop-plein sont reliées à la précuve de dosage par un conduit capillaire et la précuve de dosage a un volume inférieur à celui de la cuve de réaction avec laquelle elle est reliée.

Grâce à la barrette selon l'invention, on peut inocculer directement la colonnie bactérienne dans le milieu liquide contenu dans l'enceinte de réception de l'échantillon liquide, laquelle forme enceinte de culture, et ce sans préparer au préalable un inoculum.

Par ailleurs, le décalage longitudinal des trois séries de cuves de trop-plein, de précuves de dosage, et de cuves de réaction permet, par action de la force centrifuge selon la longueur de la barrette, dans un sens puis dans l'autre, de doser dans chaque cellule d'analyse une quantité précise de l'échantillon liquide, grâce à la cuve de trop-plein et sa communication dans un sens avec la précuve de dosage selon un conduit capillaire, puis de transvaser cette quantité dosée, sans en perdre la moindre goutte, par action de la force centrifuge dans l'autre sens.

On aboutit ainsi à un processus d'analyse médicale pouvant être totalement automatisé, dans des conditions de stérilité optimales, ce qui simplifie considérablement le travail de l'opérateur.

L'invention à également pour objet un dispositif et un procédé pour la mise en œuvre de la barrette mentionnée ci-dessus. Ce dispositif et ce procédé sont définis dan les revendications respectives 6 et 8.

Dans le dessin annexé:

– la figure 1 est une vue schématique en élévation et partiellement coupée du dispositif pour la
mise en œuvre de la barrette selon l'invention,

– la figure 2 est une vue en élévation partiellement coupée d'une barrette de conditionnement
utilisée dans le procédé selon l'invention,

– la figure 3 est une vue de dessus de la barrette de la figure 2,

– la figure 4 est une vue partielle agrandie en
coupe de l'extrémité de la barrette de la figure 2
comportant une enceinte de culture,

– la figure 5 est une vue analogue à la figure 4
montrant l'autre extrémité de la barrette de la
figure 2,

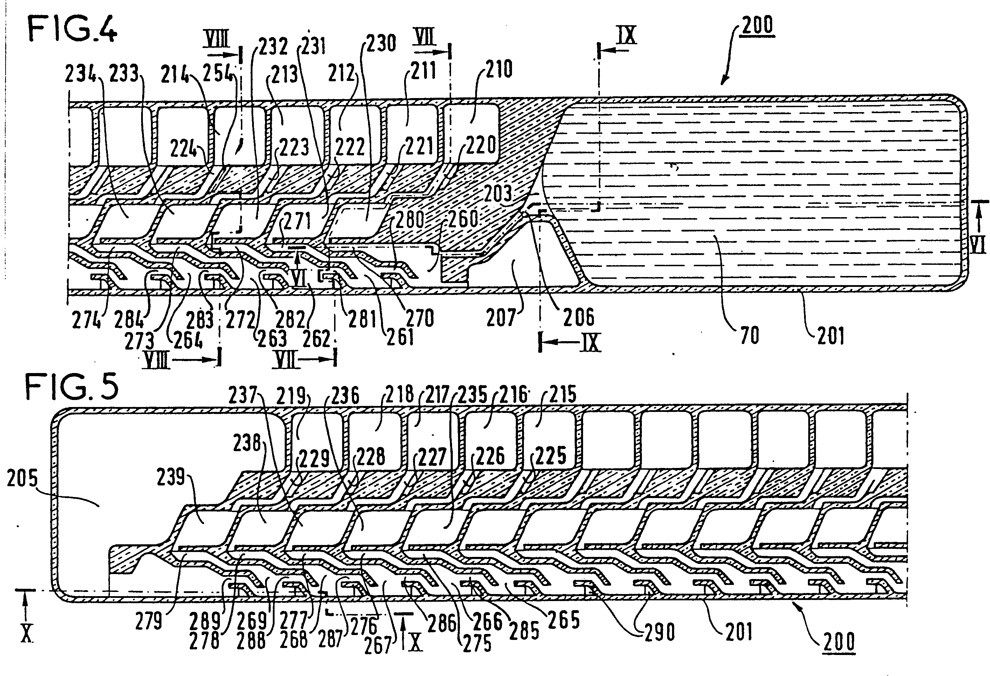

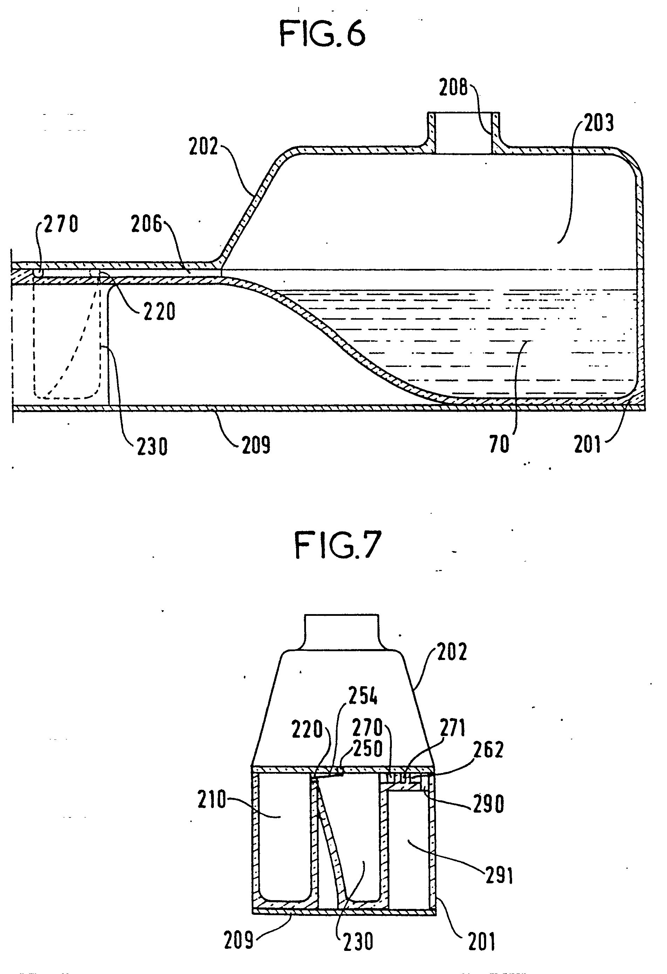

– la figure 6 est une coupe selon la ligne VI–VI
de la figure 4,

– la figure 7 est une coupe selon la ligne VII–
VII de la figure 4,

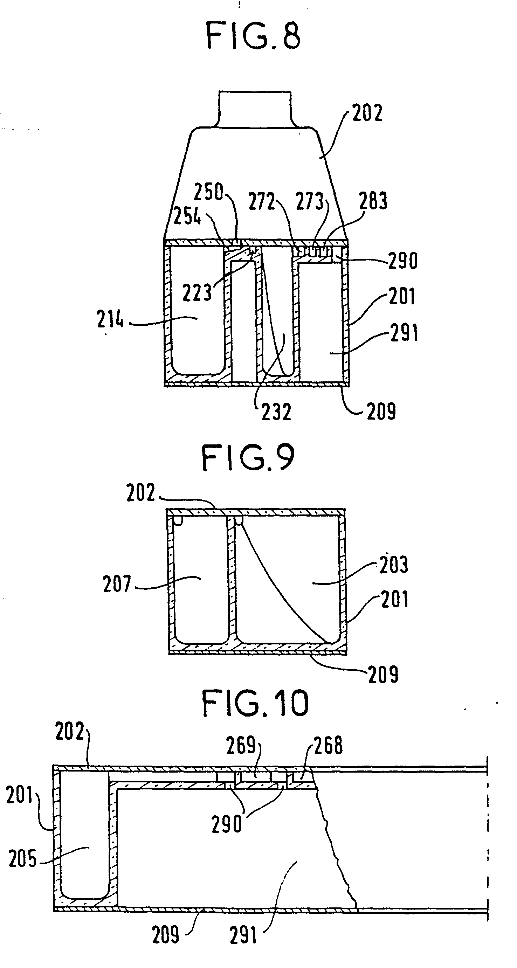

– la figure 8 est une coupe selon la ligne VIII–
VIII de la figure 4,

– la figure 9 est une coupe selon la ligne IX–IX
de la figure 4,

– la figure 10 est une coupe selon la ligne X–X
de la figure 5,

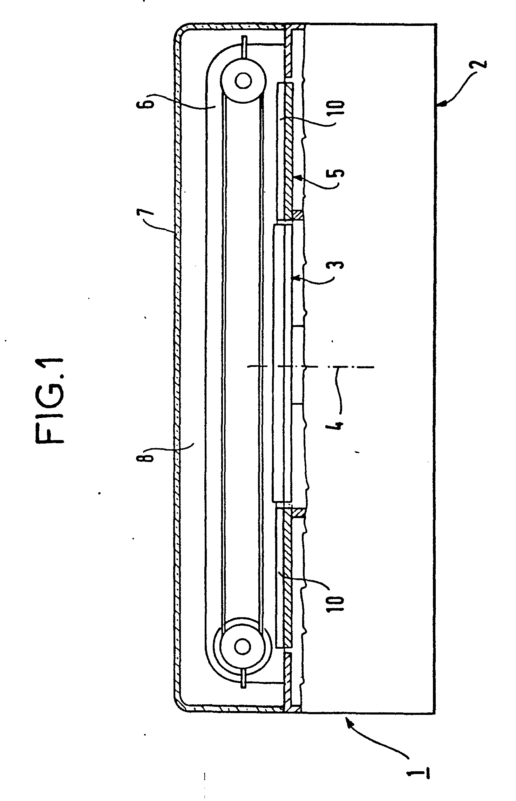

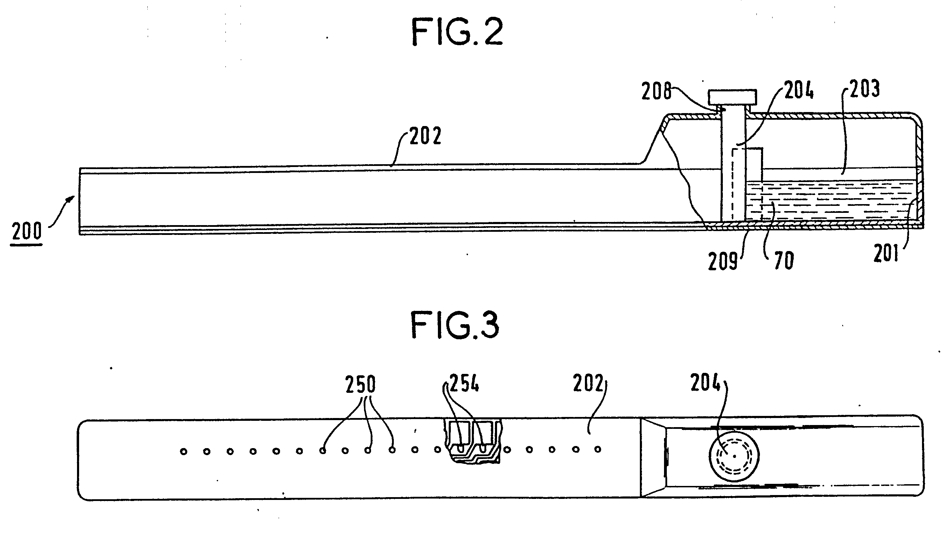

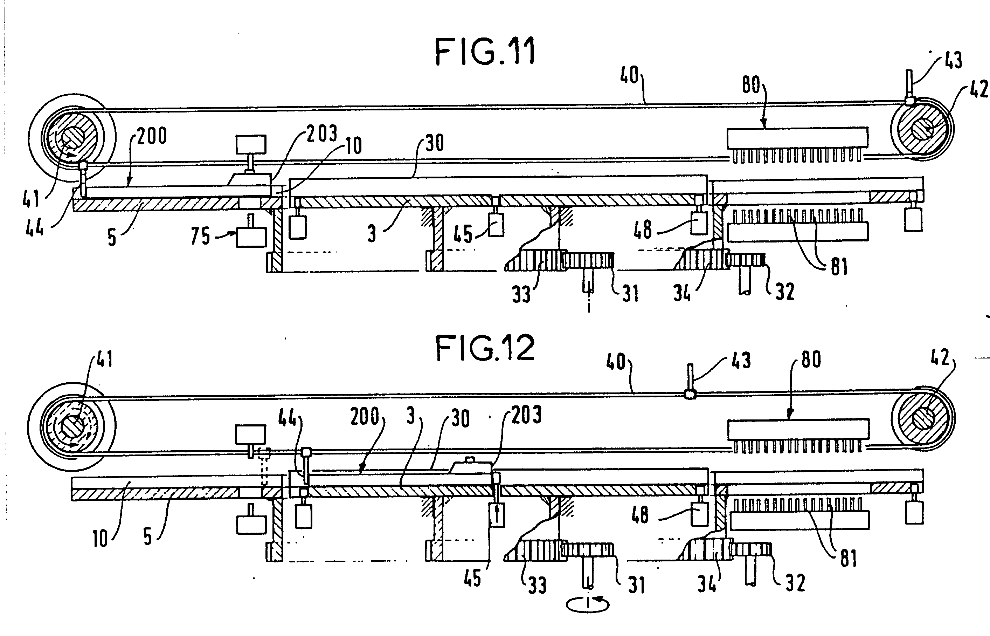

– les figures 11 à 14 sont des coupes transversales schématiques du dispositif de la figure 1
contenant dans des positions diverses une barrette selon la figure 2,

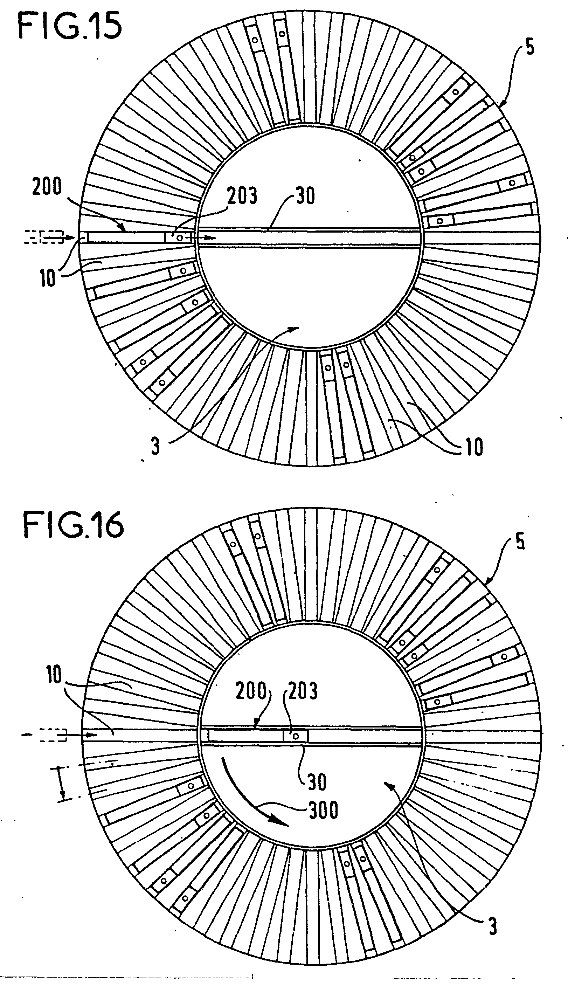

– les figures 15 à 18 sont des vues de dessus
du dispositif de la figure 1 correspondant respectivement aux figures 11 à 14,

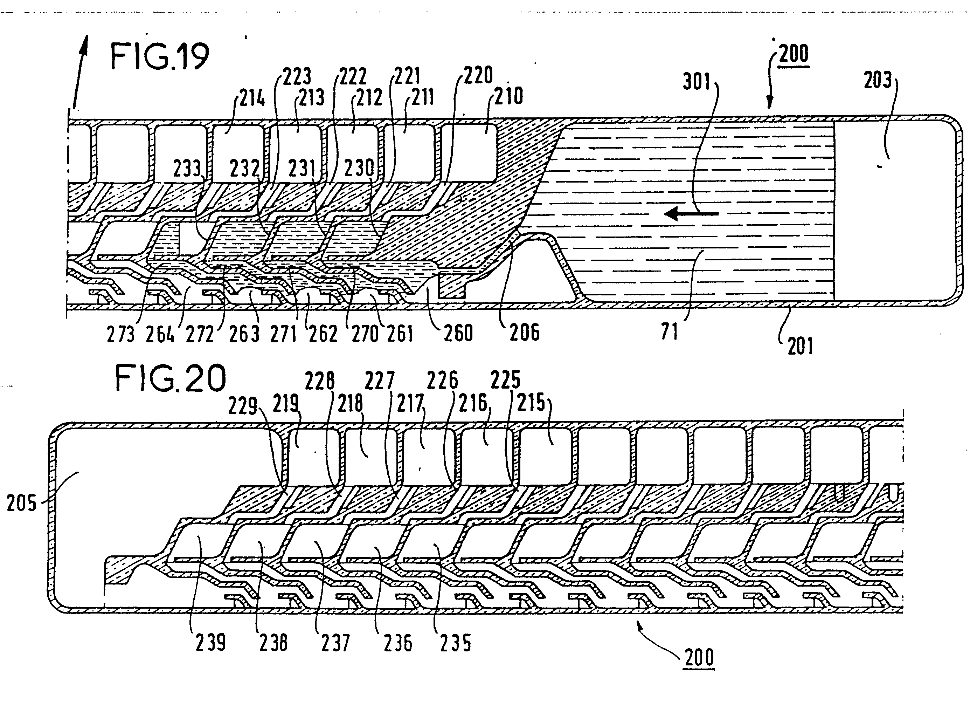

– les figures 19 et 20 montrent le début du
remplissage des précuves de la barrette de la
figure 4 par une première centrifugation,

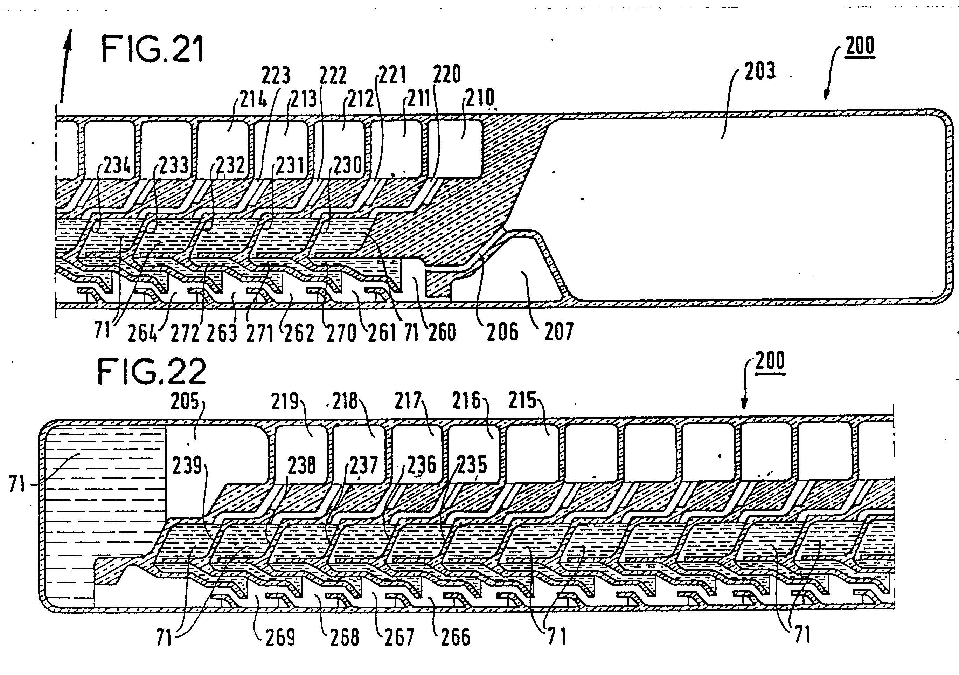

– les figures 21 et 22 sont des vues analogues
à celles des figures 19 et 20 pour la fin de la première centrifugation,

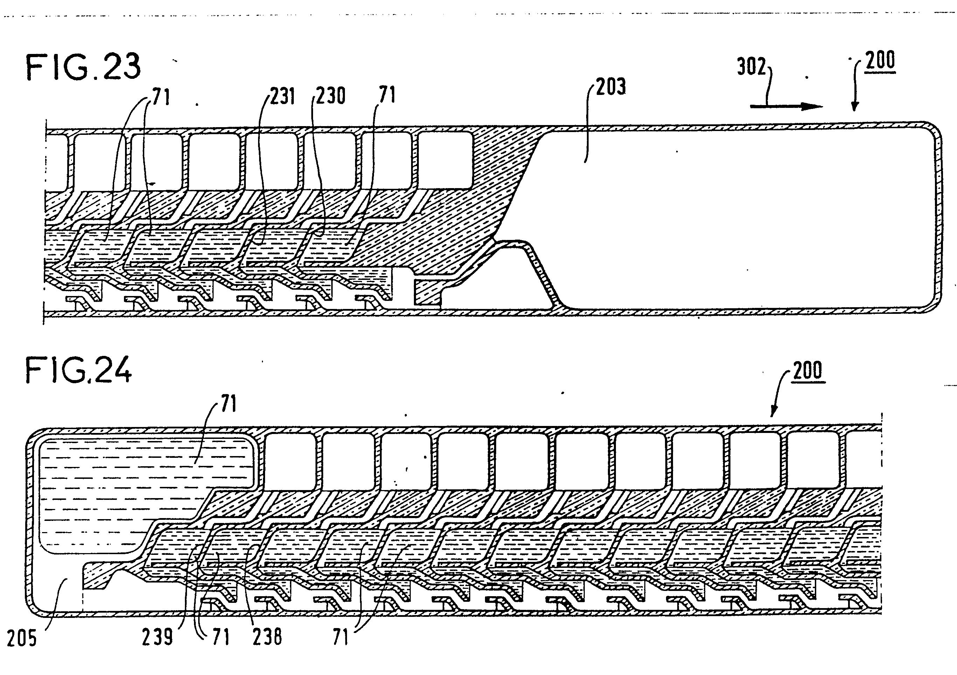

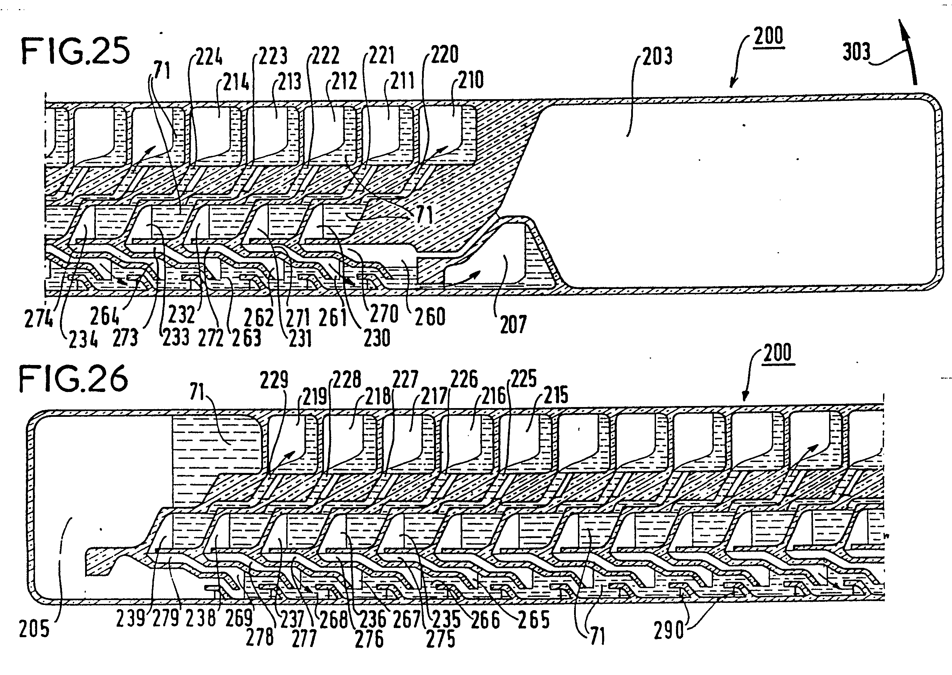

– les figures 23 et 25 montrent la barrette des
figures 21 et 22 à l'état de repos après la première
centrifugation,

– les figures 23 et 24 montrent la barrette des
figures 21 et 22 à l'état de repos après la première
centrifugation,

– les figures 25 et 26 montrent le début du
remplissage des cuves de réaction de la barrette ·
par une seconde centrifugation,

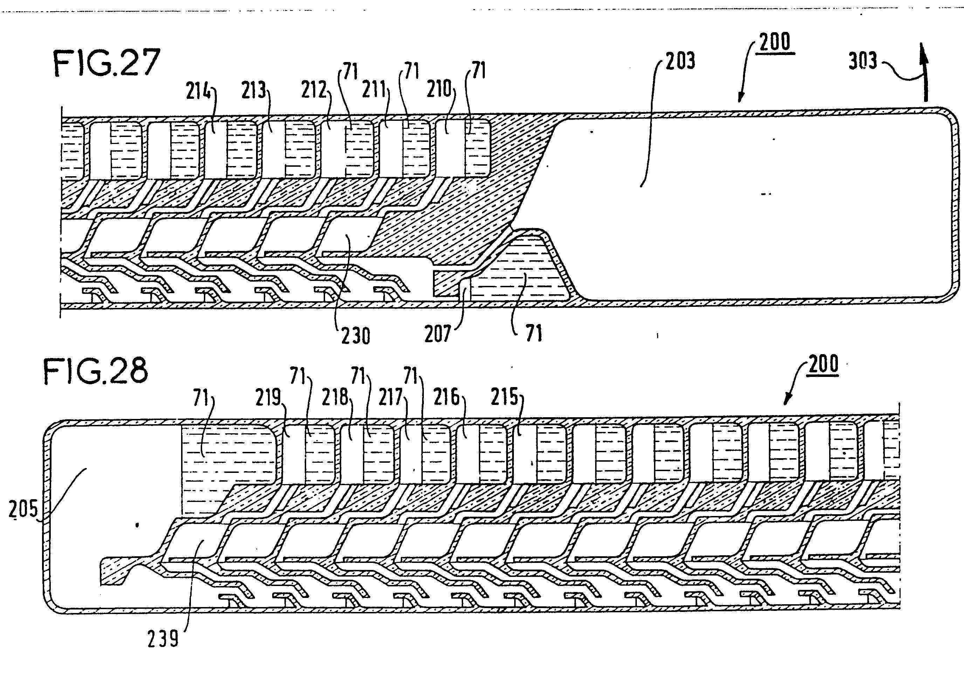

– les figures 27 et 28 sont des vues analogues
à celles des figures 25 et 26 pour la fin de la seconde centrifugation,

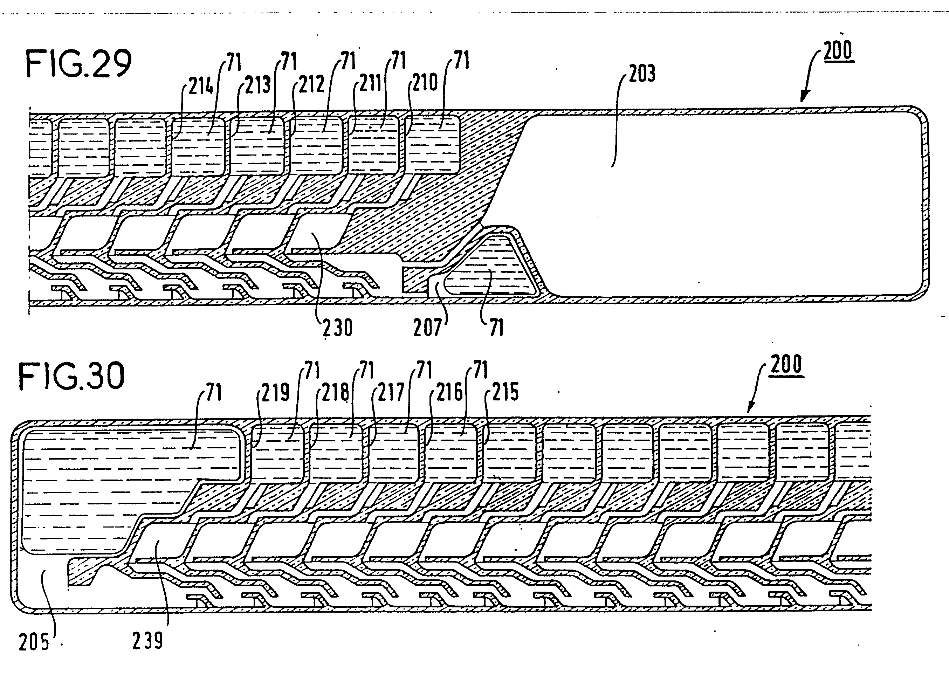

– les figures 29 et 30 montrent la barrette des
figures 27 et 28 à l'état de repos après la seconde
centrifugation,

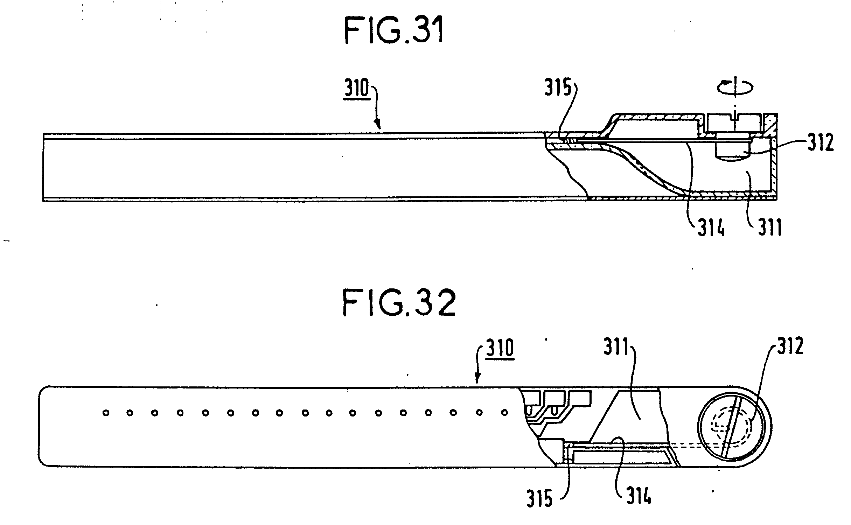

– la figure 31 est une vue en élévation partiellement coupée d'une variante de barrette de conditionnement utilisée dans le procédé selon l'invention,

– la figure 32 est une vue de dessus de la barrette de la figure 31,

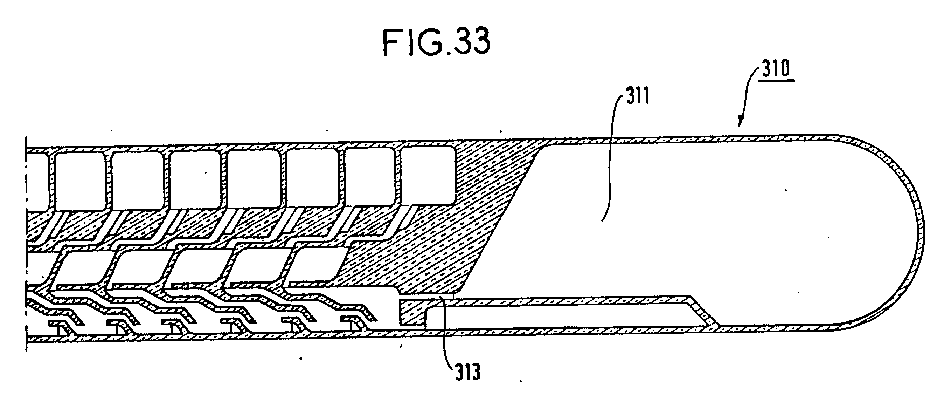

– la figure 33 est une vue partielle agrandie en
coupe du boîtier de la barrette des figures 31 et
32.

La figure 1 montre très schématiquement en
élévation semi-coupée, le dispositif permettant la
mise en œuvre de la barrette selon l'invention. Il
s'agit d'une console 1 comportant une table-support 2 pour un plateau tournant 3 autour d'un axe
4 et une couronne 5 sensiblement coplanaire susceptible d'un mouvement de rotation autour de
l'axe 4. Au-dessus de cet ensemble est solidarisé
un portique 6 supportant des moyens mécaniques
et des moyens optiques qui vont être explicités
plus loin. La partie supérieure de la table-support
2 est recouverte d'un couvercle transparent 7 qui
définit une enceinte 8 où les conditions de température peuvent être prédéterminées et maintenues
fixes, par exemple à 37 °C.

Le dispositif de la figure 1 est destiné à recevoir
une pluralité de barrettes de conditionnement 200
telles que celle qui apparaît dans les figures 2 et 3.

Les figures 2 et 3 montrent en élévation semi-
coupée et en vue de dessus un exemple de barrette de conditionnement 200 qui peut avoir une
longueur de l'ordre de 13 cm, une largeur de l'ordre de 2 cm, et une épaisseur de l'ordre de 1 cm
sur la partie longitudinale la moins épaisse.

Elle est réalisée par assemblage d'une partie
201 formant boîtier et d'une partie 202 formant
couvercle, ces deux parties étant avantageusement en matière plastique transparente moulée.
Le fond du boîtier 201 est solidarisé à une plaque
209 également en matière plastique transparente.
La barrette 200 comporte au niveau d'une première extrémité une enceinte de culture 203 présentant à sa partie supérieure une ouverture 208
fermée par un bouchon 204.

L'intérieur du boîtier 201 est visible en détail en
coupe longitudinale partielle dans les figures 4 et
5, la figure 4 montrant l'extrémité de la barrette
comportant l'enceinte de culture et la figure 5
montrant l'extrémité opposée. Les figures 6 à 10
sont des coupes transversales donnant des précisions supplémentaires.

On retrouve dans ces figures l'enceinte de culture 203 destinée à recevoir un milieu de culture
70 et qui a par exemple un volume supérieur à 800
microlitres. Elle communique avec les autres
chambres du boîtier par un conduit 206.

La barrette 200 comporte n cuves de réaction
destinées à recevoir des réactifs lyophilisés ou en
tablettes, ainsi qu'une fraction calibrée du milieu
de culture 70 après ensemencement; n est avantageusement égal à vingt, mais pour simplifier, on a
simplement référencé dix de ces cuves de réaction
210 à 219. Elles sont alignées les unes à côté des
autres suivant une paroi longitudinale du boîtier
201 et leur forme est sensiblement cubique.

Comme on le voit plus précisément dans les
figures 3 et 8 chaque cuve de réaction communique individuellement avec l'environnement extérieur par un conduit faisant partie de la face supérieure du boîtier 201 et situé en regard d'un orifice
250 prévu dans le couvercle 202. Pour la cuve
214 par exemple, il s'agit du conduit 254; ce dernier ainsi que l'orifice 250 correspondant sont légèrement décalés par rapport à la cuve de réaction
proprement dite, de manière à permettre le libre
passage de l'air vers la cuve, mais à retenir d'éventuelles impuretés extérieures.

Les cuves de réaction 210 à 219 sont respectivement reliées par des conduits capillaires 220 à 229 à n précuves de volume calibré 230 à 239 alignées parallèlement aux cuves de réaction 210 à 219, mais décalées longitudinalement par rapport à elles vers la cuve d'extrémité 205. Les conduits 220 à 229 sont coudés. Le volume calibré de chaque précuve (40 microlitres par exemple) est nettement inférieur au volume d'une cuve de réaction, la moitié environ.

La barrette de conditionnement 200 comporte en outre diverses cuves de trop-plein. Tout d'abord la cuve extrême de trop-plein 205, puis n cuves de trop-plein individuelles référencées 260 à 269, reliées respectivement aux précuves 230 à 239 par des canaux 270 à 279. Les cuves de trop-plein 260 à 269 sont alignées les unes à côté des autres le long de l'autre paroi latérale longitudinale du boîtier 201 et sont décalées longitudinalement par rapport aux précuves correspondantes vers l'enceinte de culture 203. Les canaux 270 et 279 sont coudés et orientés vis-à-vis des conduits 220 à 229 de manière sensiblement symétrique par rapport à un plan orthogonal au plan des figures 4 et 5.

Par ailleurs, les n cuves de trop-plein communiquent entre elles par des conduits 280 à 288 sensiblement parallèles aux canaux 270 à 279, et avec une gouttière commune longitudinale 291 par des orifices 290 (voir figures 7, 8 et 10). Le canal 289 fait communiquer la cuve de trop-plein 269 avec la cuve de trop-plein extrême 205. Enfin, à l'autre extrémité de la barrette, la cuve de trop-plein 260 communique avec la cuve de trop-plein 207 adjacente à l'enceinte de culture 203.

Lorsque l'on a disposé dans les n cuves de réaction les réactifs appropriés, et dans l'enceinte de culture 203 le milieu de culture 70 adéquat, le couvercle 202 est thermosoudé au boîtier 201.

La barrette ainsi garnie est stérilisée et conservée sous emballage stérile.

Pour des raisons qui seront explicitées plus loin, une barrette 200 subit différents mouvements sur le plateau tournant 3 ou sur la couronne 5 de la console de la figure 1. Les quatre positions essentielles de la barrette 200 apparaissent dans les figures 11 à 14 où le dispositif est vu schématiquement en coupe, et dans les figures 15 à 18 correspondantes où il est vu partiellement de dessus.

La couronne 5 présente une pluralité de logements radiaux 10 pour des barrettes 200. A titre d'exemple, son diamètre extérieur est de l'ordre de 40 cm, et le nombre de logements est égal à soixante. Un entraînement schématiquement représenté par deux engrenages 32, 34 permet la rotation de la couronne 5 autour de l'axe de symétrie 4, mais pas à pas, par secousses successives, par exemple une secousse par seconde.

Le plateau central 3, de diamètre 26 cm environ, peut être entraîné en rotation rapide autour de son axe 4, par un dispositif schématiquement illustré par des engrenages 31, 33. Il comporte en outre une gorge diamétrale 30 susceptible de loger une barrette 200 et des taquets 45 et 48 susceptibles d'immobiliser cette barrette suivant la première où la seconde moitié de la gorge 30.

Le passage d'une barrette 200 d'un logement 10 de la couronne 5 à la gorge 30 du plateau 3 est réalisé par l'intermédiaire d'un système mécanique à chaîne 40, entraînée par des axes 41 et 42, et munie de doigts 44, 43; ce système mécanique est solidarisé au portique 6 de la console 1.

La position initiale de la barrette 200 est illustrée par les figures 11 et 15. Cette barrette est ensuite poussée par le doigt 44 dans un rayon de la gorge 30 du plateau 3 où elle est immobilisée par le taquet 45 (voir figures 12 et 16). Par un mouvement inverse des axes 41 et 42, le doigt 44 s'écarte de la barrette 200.

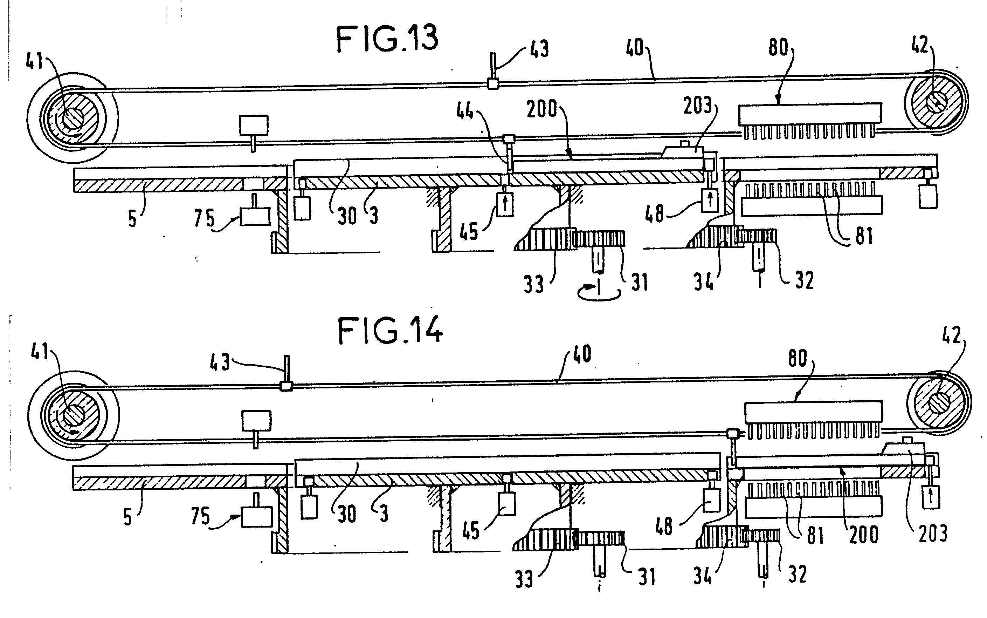

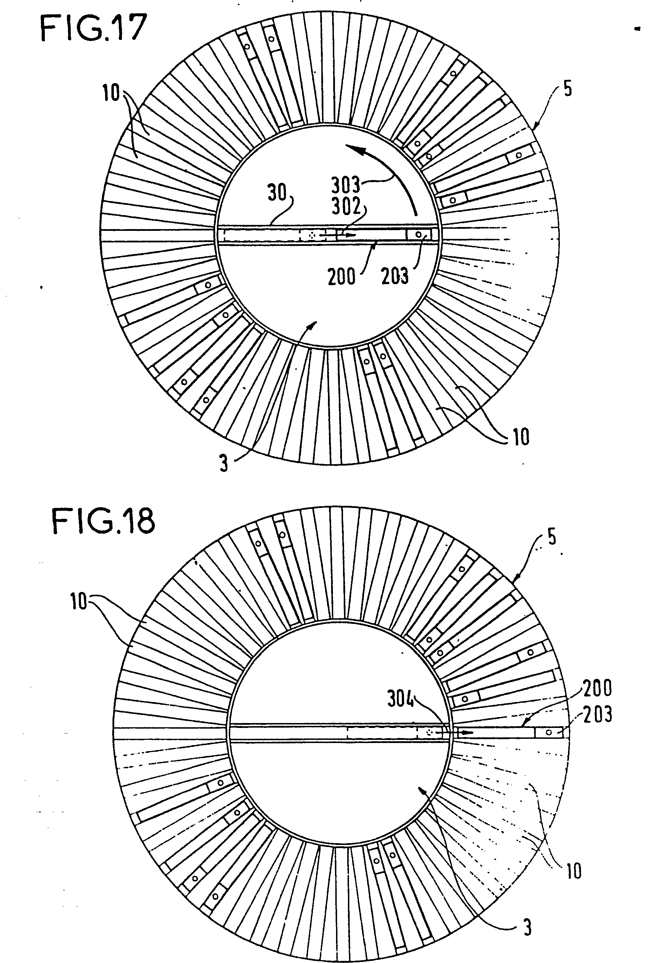

Les figures 13 et 17 montrent la barrette 200 disposée dans la deuxième partie de la gorge 30, le taquet 45 étant écarté, tandis que le taquet 48 immobilise la barrette.

Enfin les figures 14 et 18 montrent la barrette 200 remise dans son logement 10, toujours par l'intermédiaire d'une translation du doigt 44.

Le portique 6 de la console 1 comporte en outre deux types de dispositifs optiques:

— Un turbidimètre 75 (voir figures 11 et 13) situé au niveau du diamètre interne de la couronne 5 de manière à pouvoir se trouver au dessus de l'enceinte de culture 203 de la barrette 200, lorsqu'elle est normalement dans son logement 10 avant son passage sur le plateau 3.

— Un photomètre 80, muni de n têtes de lecture 81, à fibres optiques par exemple, situé au dessus de la couronne 5, de manière à ce que ses têtes de lecture se trouvent au dessus des n cuves de réaction lorsque la barrette 200 se trouve normalement dans son logement 10 après son passage sur le plateau 3.

L'ensemble des dispositifs mécaniques, thermiques, optiques, électroniques est actionné par une unité de commande centrale non illustrée.

Le procédé selon l'invention va être décrit en détail ci-dessous. On prend une barrette stérile 200 comme celle des figures 2 à 10; on enlève le bouchon 204 et on inocule directement dans le milieu de culture 70 de l'enceinte de culture 203 une colonie microbienne prélevée sur une culture sur gélose. Il est inutile, comme dans les procédés antérieurs, de préparer un inoculum à densité de germes fixe. On obtient donc un échantillon liquide à analyser 71.

Après remise du bouchon 204, l'opérateur introduit la barrette 200 dans la console selon l'invention et il n'y touche plus jusqu'à l'inscription des résultats des diverses analyses.

La barrette 200 est placée dans un logement 10 de la couronne 5 (voir figure 15) de manière que l'enceinte de culture 203 se trouve près du diamètre intérieur de cette couronne. Bien entendu plusieurs barrettes 200, jusqu'à soixante, peuvent être introduites sucessivement ou simultanément dans les logements 10.

La couronne 5, animée de son mouvement de rotation pas à pas au rythme d'une secousse par seconde, permet d'une part l'agitation du liquide 71 et d'autre part le passage de chaque enceinte de culture 203 sous le turbidimètre 75 une fois par minute (voir figure 11). Le lecture de la transparence du milieu de culture se fait automatiquement à travers la matière plastique de la barrette 200. Tant que la concentration en germes du liquide 71 est insuffisante, la barrette concernée reste sur la couronne 5. Dès que la concentration recherchée est atteinte, l'unité de commande centrale arrête le mouvement de rotation de la couronne et commande la chaîne 40 pour assurer le passage de la barrette 200 dans la gorge 30 du plateau central 3 (voir figures 12 et 16), l'enceinte de culture 203 se trouvant alors au voisinage de l'axe de rotation 4.

Tandis que la couronne 5 continue son mouvement de rotation pas à pas, la barrette 200 immobilisée dans la gorge 30 subit une première centrifugation schématisée par la flèche 300 de la figure 16.

Les figures 19 et 20 montrent la progression du liquide 71, tandis que les figures 21 et 22 montrent la répartition du liquide 71 en fin de centrifugation.

On voit dans la figure 19, le liquide 71 progresser dans le sens de la flèche 301 vers le conduit 206, la première cuve de trop-plein 260, le canal 270, la première précuve 230. L'orientation du canal 220 est telle que le liquide ne peut y entrer. Il en résulte donc un remplissage successif des cuves de trop-plein et des précuves 230 à 234. La figure 20 montre les précuves 235 à 239 encore vides. Dans le stade suivant (figures 21 à 22), l'enceinte de culture 203 est complètement vide, toutes les précuves sont remplies et le liquide 71 en excès se trouve dans les cuves de trop-plein intermédiaires et la cuve de trop-plein extrême 205. La position de repos de la barrette 200 après la centrifugation 300 apparaît dans les figures 23 et 24.

L'unité centrale de commande entraîne alors cette barrette en translation suivant la flèche 302 (voir figures 17 et 23), de manière que la barrette 200 se trouve sur la seconde moitié de la gorge 30 avec son enceinte de culture 203 située sur la périphérie du plateau tournant 3.

On réalise alors une seconde centrifugation schématisée par la flèche 303 des figures 17, 25 et 27. Les figures 25 et 26 illustrent une phase intermédiaire de la centrifugation, les figures 27 et 28 la phase finale, et les figures 29 et 30 la position de repos. Schématiquement cette centrifugation permet le passage du volume calibré de liquide 71 de chaque précuve dans la cuve de réaction associée.

Comme on le voit dans la figure 26, l'orientation des canaux 270 à 279 vis-à-vis de la direction de la centrifugation est telle que le liquide 71 s'écoule successivement dans les cuves de trop-plein 269 à 260 puis 207 et simultanément par les orifices 290 dans la gouttière commune 291. Par contre, l'orientation des conduits 220 à 229 entre les précuves 230 à 239 et les cuves de réaction 210 à 219 permet d'assurer le remplissage de ces dernières (voir figures 27 et 28).

A la fin de l'opération il ne subsiste de l'échantillon liquide 71 que dans les cuves de réaction 210 à 220 et dans les cuves de trop-plein 207 et 205.

Après la centrifugation, les réactions commencent dans les cuves de réaction 210 à 219 (voir figure 29 et 30). Lorsque le logement 10 initialement associé à la barrette 200 parvient au droit de la gorge 30, l'unité centrale commande la translation de la barrette dans son logement (voir flèche 304 de la figure 18, et la figure 14).

La barrette 200 continue à tourner avec la couronne 5 pendant tout le temps nécessaire aux réactions. Ces dernières peuvent se faire dans les meilleurs conditions possibles dans l'enceinte 8 à 37 °C; il subsiste un volume d'air suffisant au dessus de l'échantillon liquide 71 dans chaque cuve, et de toute manière cette dernière communique avec l'air extérieur.

A chaque tour, lorsque la barrette 200 passe sous le photomètre 80 (voir figure 14), ce dernier effectue sur les cuves de réaction n mesures simultanées qui sont transmises à l'unité de commande qui interprète les résultats et déclenche leur impression sur imprimante lorsque les réactions sont terminées.

Bien entendu on peut modifier certains détails de la barrette de conditionnement. Ainsi on voit dans les figures 31 à 33 une barrette 310 dont l'enceinte de culture 311 est fermée par un bouchon 312. Autour de ce bouchon est prévu un ruban de matière plastique 314 dont une extrémité peut être introduite dans une gouttière 313 et immobilisée dans celle-ci par une goutte de cire 315 (voir figures 33 et 31). Au moment de l'inoculation du germe, la rotation et l'enlèvement du bouchon 312 fait sauter la goutte de cire et libère la gouttière 313.

Par ailleurs, on a décrit un mode de lecture vertical des photomètres, mais il est possible de prévoir un mode de lecture latéral.

Quels que soient les détails de mise en œuvre, le procédé selon l'invention peut être entièrement automatisé dans un dispositif que l'on peut dénommer micro-analyseur, présentant notamment les avantages essentiels suivants:

— les germes peuvent être introduits directement à partir des cultures sur gelose et il n'est plus nécessaire d'ajuster au préalable les densités des germes dans le milieu de culture. La culture en milieu liquide est surveillée automatiquement.

— Une barrette peut être introduite à n'importe quel moment; il suffit d'arrêter la couronne quelques instants, et ceci ne perturbe en rien toutes les réactions qui ont lieu dans les autres barrettes. Il n'est plus obligatoire de regrouper les analyses par séries d'échantillons. On peut par exemple effectuer simultanément pour trente patients un identibiogramme et un antibiogramme.

— Les manipulations étant réduites au minimum, les conditions de stérilité sont optimales.

**Revendications**

1. Barrette (200) de conditionnement pour la réalisation d'analyses médicales du type identibiogramme et antibiogramme, allongée, comportant à une première extrémité une enceinte (70) pour la réception d'un échantillon à analyser, et au moins deux séries de cuves alignées longitudinalement et parallèlement les unes aux autres, à savoir respectivement des cuves (210–219) de réaction contenant des réactifs, à parois transparentes, et des précuves (230–239) de dosage, chaque précuve de dosage étant reliée par un conduit capillaire (220–229), à une cuve de réaction, caractérisée en ce que l'enceinte de réception (70) de l'échantillon à analyser est une enceinte de culture contenant un milieu liquide de culture, il est prévu une troisième série de cuves constituée par des cuves (260–269) de trop-plein, alignées longitudinalement et parallèlement aux deux séries de cuves (210–219) de réaction et de précuves (230–239) de dosage respectivement, formant avec ces dernières une pluralité de n cellules d'analyse, chaque cellule d'analyse (par exemple 233, 213, 263) comprenant une précuve de dosage (233), d'un côté de cette dernière une cuve de réaction (213), et de l'autre côté une cuve (263) de trop-plein, la cuve de réaction et la cuve de trop-plein étant reliées à la précuve de dosage par un conduit capillaire (273, 223), et la précuve de dosage (233) ayant un volume inférieure à celui de la cuve de réaction (213) avec laquelle elle est reliée.

2. Barrette selon la revendication 1, caractérisée en ce que:
 — la cuve (260) de trop-plein de la première cellule d'analyse communique avec l'enceinte (70) de culture, et avec la cuve (261) de trop-plein de la deuxième cellule d'analyse;
 — la cuve de trop-plein de la n-ème cellule d'analyse communique avec la cuve de trop-plein de la (n − 1)ème cellule de culture, et avec la cuve de trop-plein de la (n + 1)ème cellule d'analyse;
 — et la cuve (269) de trop-plein de la dernière cellule d'analyse communique avec la cuve (268) de trop-plein de l'avant-dernière cellule d'analyse, et avec une cuve (205) extrême de trop-plein.

3. Barrette selon la revendication 1, caractérisée en ce que la série des précuves (230–239) de dosage est en position médiane entre la série des cuves (260–269) de trop-plein et la série des cuves (210–219) de réaction.

4. Barrette selon la revendication 1, caractérisée en ce que les trois séries des précuves (230–239) de dosage, des cuves (260–269) de trop-plein, des cuves (210–219) de réaction respectivement sont décalées longitudinalement les unes par rapport aux autres.

5. Barrette selon la revendication 1, caractérisée en ce que l'enceinte de culture (70) est fermée par un bouchon (208), relié à un ruban (314) immobilisé par une goutte de cire (315) dans l'orifice de communication (313) entre l'enceinte de culture et la cuve (260) de trop-plein de la première cellule d'analyse.

6. Dispositif pour la mise en œuvre d'une barrette (200) selon l'une quelconque des revendications 1 à 5, comportant un plateau (3) avec des moyens (31–33) pour le faire tourner autour d'un axe vertical (4), pouvant recevoir diamétralement au moins une barrette (200) de conditionnement, caractérisé en ce qu'il comporte en outre des moyens (40) pour situer l'enceinte de culture (70) d'une barrette donnée, successivement au voisinage de l'axe vertical (4) de rotation et de la périphérie du plateau, de manière à alterner l'action de la force centrifuge par rapport à la longueur de la barrette.

7. Dispositif selon la revendication 6, caractérisé en ce qu'il comporte, outre le plateau tournant central (3):
 — une couronne périphérique (5) coaxiale avec le plateau central, avec des moyens (32–34) pour la faire tourner pas à pas, indépendamment du plateau central, et présentant une pluralité de logements radiaux (10) pour des barrettes (200) de conditionnement;
 — des moyens mécaniques (40) pour faire passer une barrette de conditionnement d'un logement radial de la couronne sur le plateau tournant, et inversement;
 — un turbidimètre (75) situé en relation avec la couronne périphérique, pour lire la transparence du milieu de culture dans chaque barrette de conditionnement;
 — un photomètre (80) comportant une pluralité de têtes de lecture (81), situées en relation avec la couronne périphérique, pour effectuer une mesure sur la pluralité des cuves (210–219) de réaction respectivement de chaque barrette de conditionnement.

8. Procédé pour la mise en œuvre d'une barrette selon l'une quelconque des revendications 1 à 5, caractérisé en ce que:
 — on inocule directement une colonie bactérienne dans le milieu liquide contenu dans l'enceinte (70) de culture d'une barrette (200) de conditionnement,
 — on agite le milieu de culture;
 — on controle la transparence du liquide du milieu de culture;
 — lorsque la transparence est satisfaisante, la barrette subit selon sa longueur, une première centrifugation qui a pour effet de remplir le liquide les précuves (230–239) de dosage, puis une seconde centrifugation qui a pour effet de vider les précuves de dosage, et d'introduire dans chaque cuve (210–219) de réaction une quantité calibrée de liquide;
 — les réactions se développant dans les diverses cuves sont controlées et, lorsque ces réactions sont terminées, des mesures photométriques sont effectuées sur les différentes cuves de réaction d'une même barrette (200) de conditionnement.

## Patentansprüche

1. Langgestreckter Konditionierstab (200) zum Durchführen von medizinischen Analysen wie Identibiogramme und Antibiogramme, mit einem an einem ersten Ende vorgesehenen Raum (70) zur Aufnahme einer zu analysierenden Probe, und mit zumindest zwei Reihen an Behältern, die längsverlaufend und parallel zueinander ausgerichtet sind, nämlich Reagenzien enthaltende Reaktionsbehälter (210–219) mit transparenten Wänden und Dosiervorbehältern (230–239), wobei jeder Dosiervorbehälter über eine Kapillarleitung (220–229) mit einem Reaktionsbehälter verbunden ist, dadurch gekennzeichnet, dass der Aufnahmeraum (70) für die zu analysierende Probe ein Kultivierungsraum ist, der ein flüssiges Kultivierungsmilieu enthält, dass eine dritte Reihe an Behältern vorgesehen ist, die durch Überlaufbehälter (260–269) gebildet wird, die längsverlaufend und parallel zu den zwei Reihen an Reaktionsbehältern (210–219) bzw. Dosiervorbehältern (230–239) ausgerichtet sind, und die mit den letzteren eine Vielzahl von n Analysezellen bilden, wobei jede Analysezelle (z.B. 233, 213, 263) einen Dosiervorbehälter (233) aufweist, auf dessen einer Seite sich ein Reaktionsbehälter (213) und auf dessen anderer Seite sich ein Überlaufbehälter (263) befindet, wobei der Reaktionsbehälter und der Überlaufbehälter mit dem Dosiervorbehälter über eine Kapillarleitung (273, 233) verbunden sind, und dass der Dosiervorbehälter (233) ein kleineres Volumen aufweist, als der Reaktionsbehälter (213), mit dem er verbunden ist.

2. Stab nach Anspruch 1, dadurch gekennzeichnet, dass
– der Überlaufbehälter (260) der ersten Analysezelle mit dem Kultivierungsraum (70) und mit dem Überlaufbehälter (261) der zweiten Analysezelle kommuniziert;
– dass der Überlaufbehälter der n-ten Analysezelle mit dem Überlaufbehälter der (n − 1)-ten Analysezelle und mit dem Überlaufbehälter der (n + 1)-ten Analysezelle kommuniziert; und
– dass der Überlaufbehälter (269) der letzten Analysezelle mit dem Überlaufbehälter der vorletzten Analysezelle und mit einem äussersten Überlaufbehälter (205) kommuniziert.

3. Stab nach Anspruch 1, dadurch gekennzeichnet, dass sich die Reihe der Dosiervorbehälter (230–239) in einer Mittellinienstellung zwischen der Reihe der Überlaufbehälter (260–269) und der Reihe der Reaktionsbehälter (210–219) befindet.

4. Stab nach Anspruch 1, dadurch gekennzeichnet, dass die drei Reihen aus Dosiervorbehältern (230–239), Überlaufbehältern (260–269) und Reaktionsbehältern (210–219) in Längsrichtung versetzt zueinander angeordnet sind.

5. Stab nach Anspruch 1, dadurch gekennzeichnet, dass der Kultivierungsraum (70) durch einen Stopfen (208) verschlossen ist, der an einem Band (314) angebracht ist, das durch einen Wachstropfen (315) in der Verbindungsöffnung (313) zwischen dem Kultivierungsraum und dem Überlaufbehälter (260) der ersten Analysezelle festgelegt ist.

6. Vorrichtung zur Handhabung eines Stabes (200) nach einem der Ansprüche 1 bis 5, mit einer Platte (3) mit Mitteln (31–33) um diese um eine vertikale Achse (4) zu drehen, wobei die Platte diametrisch zumindest einen Konditionierstab (200) aufnehmen kann, dadurch gekennzeichnet, dass sie ferner Mittel (40) aufweist, um den Kultivierungsraum (70) eines bestimmten Stabes nacheinander benachbart zur vertikalen Rotationsachse (4) und an den umfänglichen Rand der Platte in Stellung zu bringen, so dass die Einwirkung der Zentrifugalkraft hinsichtlich der Länge des Stabes verändert wird.

7. Vorrichtung nach Anspruch 6, dadurch gekennzeichnet, dass sie neben der mittigen, drehbaren Platte (3) ferner enthält:
– einen mit der mittigen Platte koaxial verlaufenden, umfänglichen Kranz (5) mit Mitteln (32–34), um diesen, Schritt für Schritt, unabhängig von der mittigen Platte zu drehen, der eine Vielzahl an radialen Aufnahmen (10) für Konditionierstäbe (200) aufweist,
– mechanische Mittel (40), um einen Konditionierstab von einer radialen Aufnahme des Kranzes auf die drehbare Platte und umgekehrt zu überbringen;
– einen Trübungsmesser (75) für Flüssigkeiten, der in Relation zum umfänglichen Kranz positioniert ist, um die Transparenz des Kultivierungsmilieus in jedem Konditionierstab abzulesen;
– einen Photometer (80), der eine Vielzahl an Leseköpfen (81) aufweist, die in Relation zum umfänglichen Kranz positioniert sind, um eine Messung über der Vielzahl an Reaktionsbehältern (210–219) eines jeden einzelnen Konditionierstabes zu bewirken.

8. Verfahren zur Handhabung eines Stabes nach einem der Ansprüche 1 bis 5, gekennzeichnet durch
– direktes Einimpfen einer Bakterienkolonie in ein flüssiges Milieu, das in einem Kultivierungsraum (70) eines Konditionierstabes (200) enthalten ist,
– Bewegen des Kultivierungsmilieus;
– Kontrollieren der Transparenz der Flüssigkeit des Kultivierungsmilieus;
– Aussetzen des Stabes entlang seiner Länge gegenüber einer ersten Zentrifugation, nachdem die Transparenz zufriedenstellend ist, um ein Füllen der Dosiervorbehälter (230–239) mit Flüssigkeit zu bewirken, anschliessend Aussetzen gegenüber einer zweiten Zentrifugation, um die Dosiervorbehälter zu entleeren und um in jedem Reaktionsbehälter (210–219) eine abgemessene Menge an Flüssigkeit einzubringen;
– Kontrollieren der in den diversen Behältern sich entwickelnden Reaktionen, und, falls die Reaktionen beendet sind,
– Bewirken von photometrischen Messungen über die verschiedenen Reaktionsbehälter desselben Konditionierstabes (200).

**Claims**

1. Longitudinal packaging bar (200) for performing medical analyses of the identity biogram and of the antibiogram type, said bar comprising at a first end an enclosure (70) for receiving a culture medium to be analysed, and at least two series of longitudinally and parallel to one another aligned chambers, namely respectively transparent walls reaction chambers (210–219) containing reagents, and measuring antechambers (230–239), each measuring antechamber communicating with a reaction chamber by means of a capillary duct (220–229), characterized in that the enclosure (70) for receiving the sample to be analysed is a culture enclosure containing a liquid culture medium, and in that a third serie of chambers, consisting of overflow chambers (260–269) is provided, said overflow chambers being longitudinally and parallely aligned to the two series of reaction chambers (210–219) and measuring antechambers (230–239) respectively, forming with the latters a plurality of n analysis cells, each analysis cell, for example (233, 213, 263), comprising a measuring antechamber (233), on one side of the latter a reaction chamber (213), and on the other side an overflow chamber (263), the reaction and the overflow chambers being connected to the measuring antechamber via a capillary duct (273, 223), and the volume of the measuring antechamber (233) being less than the volume of the reaction chamber (213) to which it is connected.

2. Packaging bar according to claim 1, characterized in that:
   − the overflow chamber (260) of the first analysis cell communicates with the culture enclosure (70), and with the overflow chamber (261) of the second analysis cell;
   − the overflow chamber of the nth analysis cell communicates with the overflow chamber of the (n − 1)th analysis cell, and with the overflow chamber of the (n + 1)th analysis cell;
   − and the overflow chamber (269) of the last analysis communicates with the overflow chamber (268) of the last but one analysis cell, and with an end overflow chamber (205).

3. Packaging bar according to claim 1, characterized in that the serie of measuring antechambers (230–239) is situated middle of the serie of overflow chambers (260–269) and the serie of reaction chambers (210–219).

4. Packaging bar according to claim 1, characterized in that the three series of measuring antechambers (230–239), of overflow chambers (260–269) and of reaction chambers (210–219) respectively are longitudinally offset from one another.

5. Packaging bar according to claim 1, characterized in that the culture enclosure (70) is closed by a stopper (208) linked with a tape (314) locked by means of a drop of wax (315) in the passage (313) between the culture enclosure (70) and the overflow chamber (260) of the first analysis cell.

6. Device for using the packaging bar (200) according to anay one of the claims 1 to 5, comprising a table (3) with means (31–33) for causing it to rotate about a vertical axis (4), and able to diametrically receive at least one packaging bar (200), characterized in that it also comprises means (40) for locating the culture enclosure (70) of a given bar, successively in the vicinity of the rotation axis (4) and of the periphery of the table, in order to alternate the action of the centrifuging force with respect to the bar length.

7. Device according to claim 6, characterized in that it comprises in addition of the central turntable (3):
   − a peripherical ring (5), coaxial with the central table, with means (32–34) for causing it to rotate step-by-step independetly from said central table, and having a plurality of radial housings (10) for receiving packaging bars (200);
   − mechanical means (40) for shifting a packaging bar from a radial housing in said ring to the turntable and vice versa;
   − a turbidimeter (75) situated in relation with the peripherical ring, for reading the transparancy of the culture medium in each packaging bar;
   − a photometer (80) comprising a plurality of read heads (81), situated in relation with the peripherical ring, for carrying out a measure on the plurality of the reaction chambers (210–219) respectively, of each packaging bar.

8. Process for using a bar according to any one of the claims 1 to 5, characterized in that:
   − a bacterial colony is directly inoculated into the liquid medium contained in the culture enclosure (70) of a packaging bar (200);
   − the culture medium is shaken;
   − the transparancy of the culture medium liquid is monitored;
   − as soon as the transparancy is satisfactory, the bar is subjected according to its length to a first centrifuging operation, which has the effect of filling the measuring antechambers (230–239) with liquid, then to a second centrifuging operation which has the effect of emptying the measuring antechambers and of inserting a measured quantity of liquid in each reaction chamber (210–219);
   − the reactions developping in the different chambers are monitored and when these reactions are completed, photometrical measures are achieved on the different reaction chambers of a same packaging bar (200).

1 / 17

FIG.1

FIG.2

FIG.3

# FIG.4

# FIG.5

# FIG.6

# FIG.7

# FIG.8

# FIG.9

# FIG.10

EP 0 189 724 B1

## FIG.11

## FIG.12

FIG.13

FIG.14

FIG.15

FIG.16

# FIG.17

# FIG.18

FIG.19

FIG.20

EP 0 189 724 B1

EP 0 189 724 B1

# FIG.21

# FIG.22

FIG.23

FIG.24

EP 0 189 724 B1

EP 0 189 724 B1

## FIG.25

## FIG.26

EP 0 189 724 B1

## FIG.27

FIG.27 214 213 212 71 211 71 210 71 203 200 303

230 207 71

## FIG.28

FIG.28 71 219 71 218 71 217 71 216 215 200

205

239

FIG.29

FIG.30

EP 0 189 724 B1

EP 0 189 724 B1

# FIG.31

310
315
312
314
311

# FIG.32

310
311
312
315
314

FIG.33

310

311

313